# EUROPEAN PATENT APPLICATION

(11) **EP 0 976 352 A1**
(43) Date of publication of application: **02.02.2000**
(21) Application number: 98830462.2
(22) Date of filing: 30.07.1998
(51) Int. Cl.: A47J 37/07

(54) **Barbecue with whole use of the fuel**

(71) Applicant: Righi, Roberto, 60043 Cerreto d'Esi (Ancona) (IT)
(72) Inventor: Righi, Roberto, 60043 Cerreto d'Esi (Ancona) (IT)
(74) Representative: Sassatelli, Franco T., Dr.

(57) **Abstract**

The device is provided to be packed by closing of two halfparts connected on hinges (1). Of said halfparts the first consists of a box (2) with in its inside, on a counterposed couple of linear supports (3), a stoker (4) so forming a stored up chamber (5) for the cinders in which the ventilation is permitted through a front opening (6). The second halfpart is formed by a cover (7). For the using, with the barbecue supported in position, the cover (7) is lifted tilting a front taking part (8) so determining the disconnecting of the cover (7) to be then placed in lifting to act as hearth protection. After to have opened the barbecue, the fuel is placed on the stoker (4) and the same is lighted acting then with a grill (11) as food cooker. After the cooking, with the fuel residue onto the stoker (4), the barbecue is closed. To actuate this closing the opening (6) is closed with the door (12) rotating on hinges (13) and the cover (7) is closed so determining inside the device the extinction of the fuel residue owing to the immediate exhausting of the burning.

## Description

The invented device refers to a new barbecue which principally realizes, with burning gets exhausted immediately after stopping of the cooking, the whole use of the fuel contained into the same within a postponed use and its subsequent easy lighting thanks to the generated anhydrous residue. In the barbecues, devices for cooking meats outdoor onto embers and onto stoker, the hearth consists of a hollow with continuous wall on a supporting part to be positioned on the ground, where said stoker supports the solid fuel and it permits the air passage for the combustion and the falling of the cinders into a collecting box situated in the below hollow forming the ventilation chamber for the continuous bringing of the burning. Currently a problem is present in the use of said devices of big use between the equipments for cooking food in the campings and in the gardens. Said problem is given by the big waste of the fuel and by the further pollution environment caused both to the smokes that go on to propagate in the air than to the falling of the partially combusted residues owing to the impossibility, in the current devices, to stop the combustion into the hearth after the foot cooking. In the loose land of the country said residues are discharged by burial so avoiding their environment dispersion while, where a collecting of residues is present, cinders are put over the embers so actuating their extinction, then with caution said cinders with the unburnt residues are introduced into a container to be then discharged into the dustbin. But in a device for cooking meats, where a big heat is necessary for all the cooking phase, is not possible to make coincide the cooking times with the natural burn up of fuel and consequently it is clear that each of these cooking phases create a big waste of the same fuel. On this base after each cooking is necessary to proceed in some way to the disposal of the burnt residues and of the slivers. The invented barbecue avoids all said drawbacks by using a new technology in base of which when the device is came in closing the hearth comes to be located into an extinction chamber in which, owing to the immediate exhausting of the burning, the combustion comes to stop. The same combustion to be activated again for a further cooking phase by a new ignition easily actuated thanks to the anidrous condition of the residues after having open again the device. While the cinders fallen down in a lower stored up chamber is to be at irregular intervals discharged on the base of the necessities. In this way a further advantage is realized in comparison with the current devices in which, being the air passage through openings onto an outward wall on a ventilation hollow space underlying the stoker, before re-using the device it is necessary to discharge the stored up cinders in its inside.

The invented barbecue consists of a closed parallelepipedal body to be packed by closing of two halfparts on hinges. Of said halfparts one to be positioned on a support means and to form the hearth with a stoker supported on counterposed couple of linear projections so to form a below stored up chamber for the cinders in which the ventilation is permitted through a door placed centrally on the front wall, whereas the second halfpart to be lifted up for wind protection. After the cooking of the food the barbecue is closed by packing the two halfparts and by closing the door so determining for getting exhausted of the burning the combustion stop. Also regarding the phases of mounting in position, transport and storing the invented device realizes advantages in comparison with the current devices. Said current devices infact consist of disjointed parts of support and of cooking with wind protection sectors difficult to be compacted and of difficult transport. On the other hand the invented device consists of a body to be easily transported like a suit-case. In a preferred embodiment the invented barbecue consists of a device to be packed by closing of two halfparts connected on hinges 1. Of said halfparts one halfpart consists of a box 2 with in its inside a counterposed couple of linear supports 3 for a stoker 4 so under forming a stored up chamber 5 for the cinders in which the ventilation is permitted through a front opening 6.

Whereas the second halfpart is formed by a cover 7. For the using, with the barbecue supported in a correct position, the cover 7 is lifted bringing in rotation toward a front taking part 8 so determining the disconnecting of a passing stop 9 on a spring lever 10 disengaged the said cover 7. The same cover 7 is then placed in lifting to act the hearth protection against the wind and, in this way, having the barbecue prompt to be used. Then the fuel is placed on the stoker 4 and the same is lighted acting then with a grill 11, or in other way, the food cooking. After the cooking with the fuel residue onto the stoker 4 the barbecue is closed.

To actuate this closing the opening 6 is closed with the door 12 rotating on hinges 13 by inserting the rod end 14, connected with the same door and rotated on joint 15, into a crack 16, then also the cover 7 is closed so determining inside the device the extinction of the fuel residue owing to the immediate exhausting of the burning.

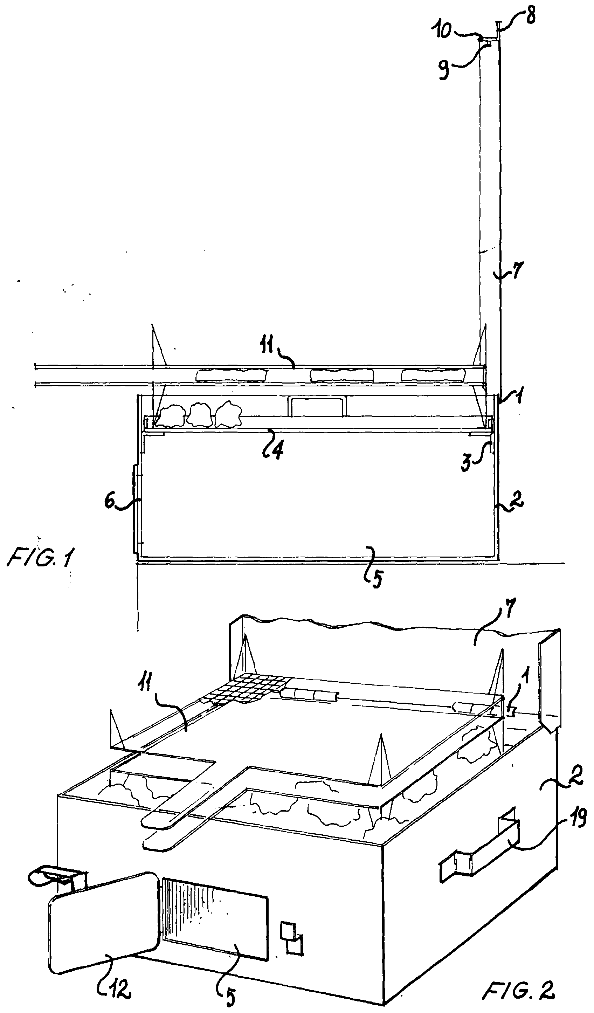

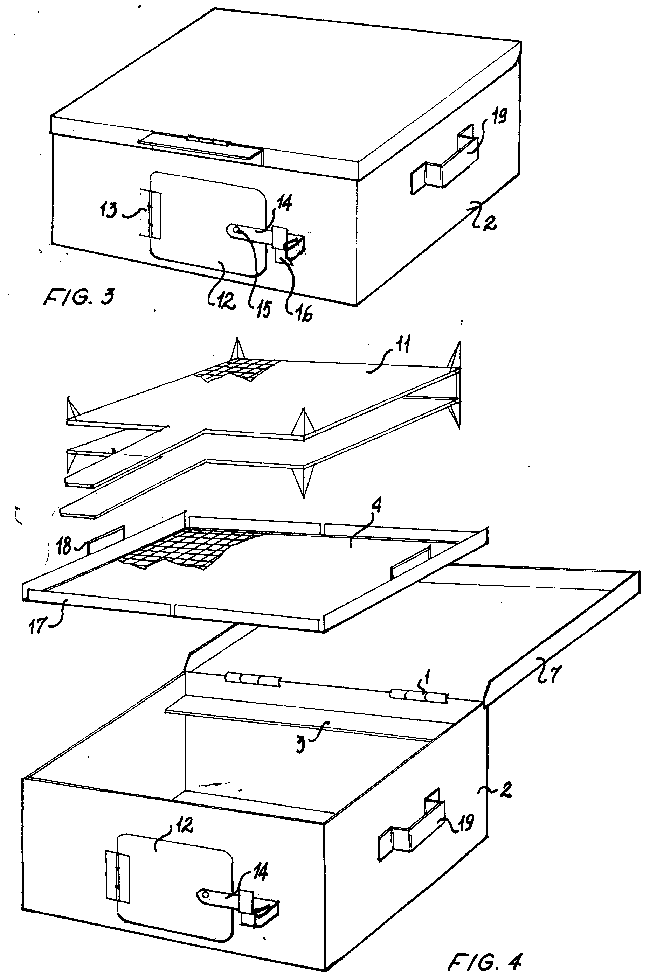

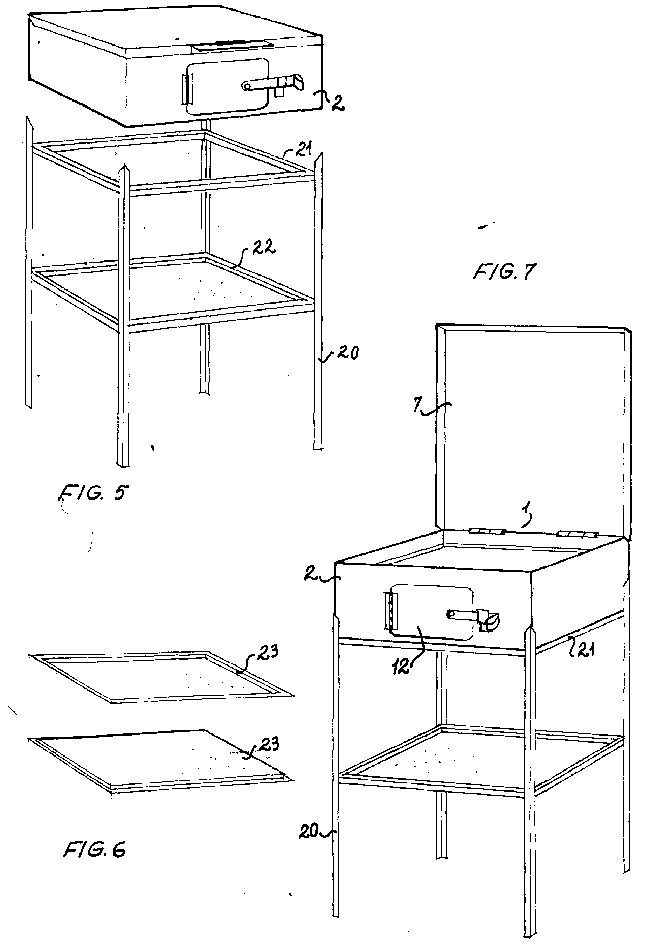

Regulating the opening of the door 12 is possible to change the ventilation flow on the stoker so getting in relation the combustion intensity with the cooking necessities. Alternatively the front opening 6 is to be closed with a sliding door on a couple of parallel counterposed parts. In this way is possible to realize a device with a body having a permanent parallelepipedal form and with the possibility of easily to regulate mnemonically the opening by using a gratuated scale. The stoker 4 is provided with lifting separated sectors 17 to contain the fuel and with a couple of handle 18 for its raising. The device in closing forms a parallelepipedal rigid body to be raised by means of a handle 19. For the device stabilization a support for the device supporting is provided. Said decomposable means consists of four uprights 20 on which an upper shelf 21 and an intermediate shelf 22 are positioned. Said intermediate shelf 22 with an inside seat to position a tray 23 to be used on a part for the food disposition and on the other part to contain the season means and other or the meat to be cooked. Using said stabilization means to be decomposed in four linear uprights and in two plane shelfs is possible to place the device in compact position with overall dimension. The invented device is illustrated in indicative view in the drawings of sheets 1, 2 and 3. In sheet 1 fig. 1 is a transversal section view of the device before beginning the cooking. Fig. 2 is a perspective view of the same device. In sheet 2 fig. 3 is a perspective view of the closing device. Fig. 4 is an exploded view of the means to be used for cooking. In sheet 3 fig. 5 is exploded view of the stabilization support and of the closed barbecue. Fig. 6 is perspective view of the tray 23 to be noted in the two possibilities of use. Fig. 7 is a perspective view of the opened device onto the supporting means.

## Claims

1. Barbecue with whole use of the fuel consists of a device to be packed by closing of two halfparts connected on hinges (1); characterized in that:
- one halfpart consists of a box (2) with in its inside a counterposed couple of linear supports (3) for a stoker (4) so under forming a stored up chamber (5) for the cinders in which the ventilation is permitted through a front opening (6) whereas the second halfpart is formed by a cover (7);
- for the using, with the barbecue supported in a correct position, the cover (7) is lifted bringing in rotation toward a front taking part (8) so determining the disconnecting of a passing stop (9) on a spring lever (10) disengaged the said cover (7) to be then placed in lifting to act the hearth protection against the wind and so having the barbecue prompt to be used;
- the fuel is placed on the stoker (4) and the same is lighted acting then with a grill (11), or in other way, the food cooking;
- after the cooking with the fuel residue onto the stoker (4) the barbecue is closed, to actuate this closing the opening (6) is closed with the door (12) rotating on hinges (13) by inserting the rod end (14), connected with the same door and rotated on joint (15), into a crack (16) then also the cover (7) is closed so determining inside the device the extinction of the fuel residue owing to the immediate exhausting of the burning.

2. Barbecue with whole use of the fuel, as per claim 1), characterized in that regulating the opening of the door (12) is possible to change the ventilation flow on the stoker so getting in relation the combustion intensity with the cocking necessities.

3. Barbecue with whole use of the fuel, as per claim 1), characterized in that the front opening (6) is to be closed with a sliding door on a couple of parallel counterposed parts; in this way is possible to realize a device with a body having a permanent parallelepipedal form and with the possibility of easily to regulate mnemonically the opening by using a gratuated scale.

4. Barbecue with whole use of the fuel, as per claim 1), characterized in that the stoker (4) is provided with lifting separated sectors (17) to contain the fuel and with a couple of handle (18) for its raising.

5. Barbecue with whole use of the fuel, as per claim 1), characterized in that the device in closing forms a parallelepipedal rigid body to be raised by means of a handle (19).

6. Barbecue with whole use of the fuel, as per claim 1), characterized in that for the device stabilization a support for the device supporting is provided, said decomposable means consists of four uprights (20) on which an upper shelf (21) and an intermediate shelf (22) are positioned, said intermediate shelf (22) with an inside seat to position a tray (23) to be used on a part for the food disposition and on the other part to contain the season means and other or the meat to be cooked.
